# EUROPEAN PATENT SPECIFICATION

(11) **EP 2 703 233 B1**
(45) Date of publication and mention of the grant of the patent: **03.02.2016**
(21) Application number: 12777056.8
(22) Date of filing: 20.04.2012
(51) Int. Cl.: B60R 21/2346, B60R 21/217, B60R 21/262

(54) **AIRBAG DEVICE**
AIRBAGVORRICHTUNG
DISPOSITIF DE COUSSIN DE SÉCURITÉ GONFLABLE

(30) Priority: 28.04.2011 JP 2011102252
(43) Date of publication of application: 05.03.2014
(73) Proprietor: Ashimori Industry Co., Ltd., Osaka-shi Osaka 550-0014 (JP)
(72) Inventor: HASHIZUME, Tomoki, Settsu-shi, Osaka 566-0001 (JP); MINAMI, Yuta, Settsu-shi, Osaka 566-0001 (JP); IIDA, Jyunya, Settsu-shi, Osaka 566-0001 (JP)
(74) Representative: Appelt, Christian W.
(86) International application number: PCT/JP2012/060727
(87) International publication number: WO 2012/147654

(56) References cited:
- JP-A- 9 169 253
- JP-A- 10 016 690
- JP-A- 10 203 290
- JP-A- H07 505 345
- JP-A- 2003 212 078
- JP-A- 2003 291 772
- JP-A- 2005 104 176
- JP-A- 2010 235 043

## Description

### Technical Field

The present invention relates to an airbag device that inflates and deploys an airbag in a vehicle cabin to protect an occupant, and more specifically, it relates to an airbag device characterized by its joint structure for connecting an airbag and an inflator of the airbag device.

### Background Art

Various airbag devices, such as those installed in front of or at a side of an occupant and those installed at a side of a plurality of seats, on the side of a vehicle body, are used to protect occupants in an emergency or a collision of a vehicle. Some of these airbags use a cylindrical inflator.

When a cylindrical inflator is attached to an airbag, if a force that joins them is weak, the airbag may slip off from an inflator due to the reaction force of gas blown from the inflator. To counter this problem, various joint structures have been proposed.

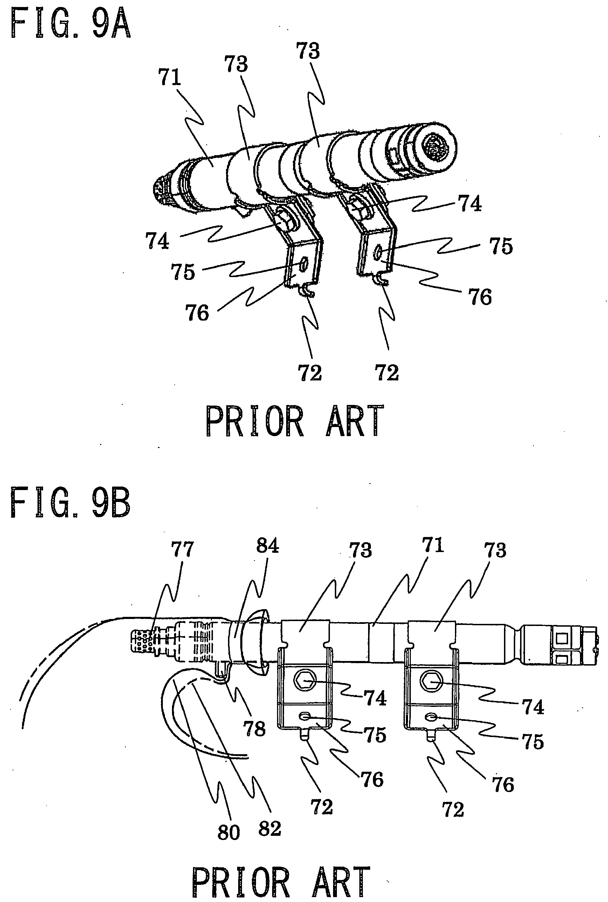

FIG. 9 shows a conventional inflator joint structure, which is not disclosed in a patent literature. FIG. 9A is a perspective view of an inflator, showing a side surface thereof as viewed from obliquely behind, and FIG. 9B is a front view of the inflator.

This cylindrical inflator 71 is attached to a vehicle body (not shown) with an attachment bracket 72 that includes grip portions 73, which grip the inflator 71, and attachment portions 76, which are formed integrally with the grip portions 73 and are attached to the vehicle body.

Herein, the grip portions 73 are configured as strip-shaped members that substantially surround the body of the inflator 71. The inflator 71 is inserted through the strip-shaped members, and ends of the strip-shaped members are brought into contact with each other and are joined with bolts 74.

The attachment portions 76 are configured as plate-shaped members that are formed integrally with the grip portions 73 so as to extend from ends of the strip-shaped members and have attaching holes 75 for bolts that are used to join the inflator 71 to a predetermined attachment position of the vehicle.

In this conventional airbag device, an airbag 82 and the inflator 71 are joined as follows.

That is, as shown in FIG. 9B, the airbag 82 is provided with a diffuser 80 at a gas introduction port thereof. A gas blowing portion 77 of the inflator 71 is inserted into the diffuser 80, and in this state, a band 84 is fastened around the airbag 82 from the outside. Furthermore, a stud pin 78 is provided on the inflator body, at a position near the gas blowing portion 77 of the inflator 71, to prevent the band 84 from slipping off from the inflator 71.

In this airbag device, by using the above-described joint structure, the airbag 82 is joined to the inflator 71 with the diffuser 80 therebetween and is prevented from slipping off, and at the same time, the gas blown from the inflator 71 is prevented from leaking from the diffuser 80.

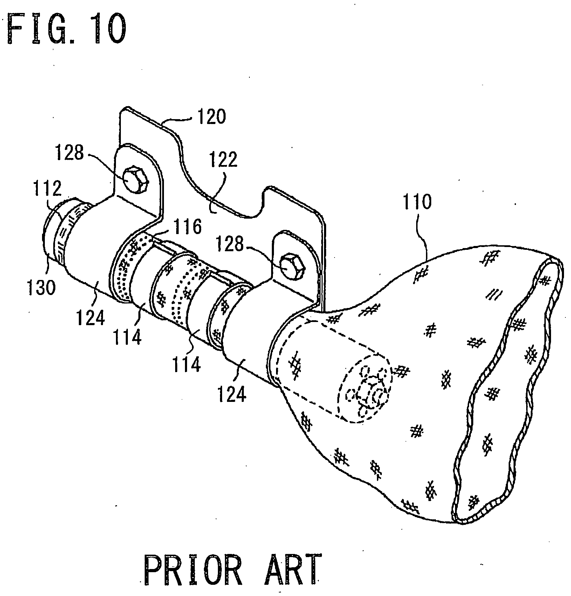

FIG. 10 shows another conventional inflator joint structure for connecting an inflator and an airbag.

In this joint structure, a portion near a gas introduction port 112 of an airbag 110 is externally fitted to an inflator 130, and the portion near the gas introduction port 112 is fastened with two bands 114 from the outside. Each of perforation lines 116 protruding from an outer circumferential surface of the airbag 110 is provided near the bands 114, in a circumferential direction of the inflator 130. Furthermore, the gas introduction port 112 of the airbag 110 and the inflator 130 are fastened with a pair of saddle bands 124 provided on a holder 120. When the airbag 110 is likely to slip off when the airbag 110 is inflated, the perforation lines 116 are caught by the bands 114, thereby reliably preventing the airbag 110 from being detached. Furthermore, by disposing ends of the saddle band 124 on a plate portion 122, inserting bolts 128 through bolt insertion holes provided in portions where the saddle bands 124 and the plate portion 122 overlap each other, and fastening the bolts 128, the airbag 110 and the inflator 130 are joined to the holder 120, and the holder 120 is joined to a vehicle-body side member with the bolts 128 (see Japanese Unexamined Patent Application, Publication No. 2000-85510).

The above-described joint structures are both expected to have certain effects on preventing gas leakage and preventing slipping off of the inflator by overcoming the reaction force generated when the inflator discharges gas.

However, these joint structures are composed of a large number of components and have complex structures. In addition, when an inflator having a different outside diameter is to be used, an attachment bracket (or a holder) having a size that fits this outside diameter has to be used, increasing the type of component required. Thus, from the standpoint of the production efficiency and cost of the airbag device, further improvement is required.

Furthermore, in recent years, due to an increase in size of airbags associated with increased number of seats (e.g., three-row seats) in a vehicle and improved occupant protection performance, the internal pressure of airbags when they are deployed tends to be increased. Therefore, it is necessary to further improve the slip-off prevention performance of the conventional airbags to more effectively comply with increase in blowing pressure of inflators. However, the above-described conventional joint structures rely only on a friction force and a slip-off prevention effect exerted by the bands to prevent slipping off, which are still insufficient.

From document JP2010-235043 A, an airbag device is known which shows an airbag according to the preamble of claim 1.

### Summary of Invention

### Technical Problem

The present invention has been made in view of the above-described conventional problems, and an object thereof is, in an airbag device, to enable an inflator having any outside diameter and an airbag (gas introduction portion) to be joined with a common joint member and to reduce the number of components needed by the joining, thereby improving the working efficiency of joining work. Solution to Problem

The present invention is an airbag device including an airbag; a gas introduction portion provided in the airbag; and an inflator inserted into the gas introduction portion. The inflator has a fixing member projecting outward from an outer circumferential surface of a body thereof. The fixing member is inserted through a fixing-member insertion hole provided in the gas introduction portion and an inflator attaching hole provided in an attachment bracket for attaching the airbag to a vehicle body, and a fastening member is fitted to the fixing member, thereby fastening and connecting the gas introduction portion and the inflator together to the attachment bracket.

### Advantageous Effects of Invention

According to the present invention, in an airbag device, an inflator having any outside diameter and a gas introduction portion can be joined with a common joint member. In addition, it is possible to reduce the number of components and to improve the working efficiency of joining work.

### Brief Description of Drawings

[FIG. 1] FIG. 1 is a front view showing the configuration of an airbag device according to an embodiment of the present invention.
[FIG. 2] FIG. 2 includes diagrams showing a joint structure of an inflator of this airbag device.
[FIG. 3] FIG. 3 includes diagrams showing a gas introduction portion according to this embodiment.
[FIG. 4] FIG. 4 includes diagrams for explaining the process of attaching the inflator to an airbag.
[FIG. 5] FIG. 5 includes diagrams showing a state in which the inflator shown in FIG. 2 is joined to the gas introduction portion.
[FIG. 6] FIG. 6 is a diagram showing the positional relationship between an attachment bracket and an inflator when an inflator having a different outside diameter is used for the bracket shown in FIG. 5B.
[FIG. 7] FIG. 7 is a diagram showing the positional relationship between components when an elastically deformable bracket is used in FIG. 5B.
[FIG. 8] FIG. 8 is a diagram showing the positional relationship between components when the hole diameter of a bolt insertion hole in FIG. 5B is made larger than the diameter of a large diameter portion of a bolt.
[FIG. 9] FIG. 9 is a diagram showing an example of a conventional inflator joint structure.
[FIG. 10] FIG. 10 is a diagram showing an example of another conventional inflator joint structure. Description of Embodiments

An embodiment of an airbag device of the present invention will be described with reference to the drawings.

The airbag device according to this embodiment is a so-called curtain airbag device that deploys an airbag like a curtain in a vehicle cabin, in the front-rear direction of the vehicle.

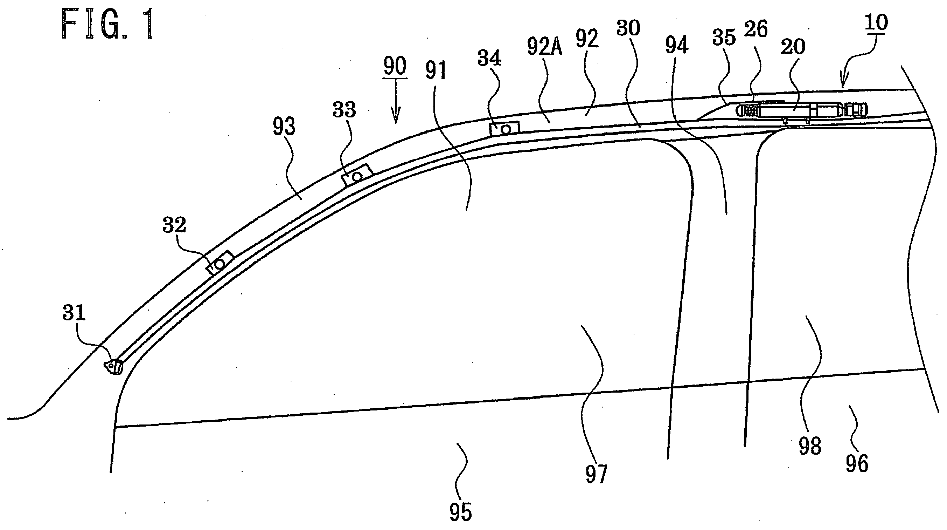

FIG. 1 is a front view of the airbag device according to an embodiment of the present invention. FIG. 1 shows a side wall of a vehicle and the airbag device as viewed through the interior of the vehicle, while omitting the rear side of the vehicle.

As shown in the figure, a vehicle 90 includes, on a side wall 91 inside the vehicle cabin, a roof rail 92 located on the upper side, a front pillar (A pillar) 93 located on the front side, a center pillar (B pillar) 94 located in the middle in the front-rear direction, and a rear pillar (C pillar) (not shown) located on the rear side. The side wall 91 is provided with a front door 95 located on the front side and a rear door 96 located on the rear side.

The front door 95 is provided on the front side of the vehicle 90 and is located below the front pillar 93. The rear door 96 is provided on the rear side of the vehicle 90 and is located below the rear pillar.

A trim or a part of a headlining 92A is attached to the side wall 91, and the trim constitutes a surface member (interior material) inside the vehicle 90. The headlining 92A covers a roof (not shown) and the roof rail 92. The headlining 92A is typically formed of a material that is less rigid and is more readily deformable than the material of the trim. Denoted by reference numerals 97 and 98 are windows provided in the doors 95 and 96.

The airbag device 10 includes an airbag 30 and an inflator 20. The airbag (herein, a curtain airbag) 30 is, for example, folded into an accordion shape from the edge on the lower side (lower edge) toward the edge on the upper side (upper edge) or rolled up, on the side wall 91 side, from the lower edge toward the upper edge into a long, narrow shape.

The folded airbag 30 is disposed between the vehicle body and the trim and between the vehicle body and the headlining 92A, and a distal end portion 31 and joint fabric pieces 32 to 34 are joined to predetermined positions of the front pillar 93 and the roof rail 92 with joint means, such as bolts. Thus, the airbag 30 is disposed along the upper portion (upper edge) of the side wall 91 inside the vehicle cabin, from the rear pillar to the front pillar 93.

The inflator 20 is a cylinder-type gas generator having a cylindrical shape and has a gas blowing portion 26 at one end in the length direction. The inflator 20 and the airbag 30 are joined to each other via a gas introduction portion (also, "cushion") 35, which is stitched in a tubular shape and is formed in the airbag 30, and are attached, above the center pillar 94 and inside the headlining 92A, to the roof rail 92, via an attachment bracket, serving as joint means (described below).

The inflator 20 generates gas and supplies the gas to the airbag 30 in an emergency of a vehicle or when an impact is detected. With this gas, the airbag 30 is inflated and deployed downward like a curtain, from the upper portion of the side wall 91.

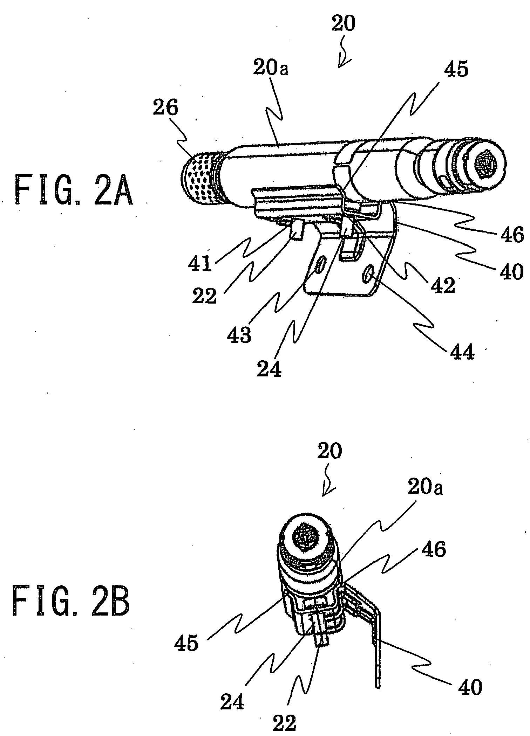

FIG. 2 includes diagrams showing the joint structure of the inflator 20. FIG. 2A is a perspective view of the front side of the inflator 20, as viewed from obliquely behind, and FIG. 2B is a perspective view of the side end surface of the inflator 20, as viewed from obliquely below.

The inflator 20 is provided with, on an outer circumferential surface thereof, two bolts 22 and 24, serving as fixing members, which stand upright, parallel to each other, at positions a predetermined distance away from each other in the longitudinal direction of a cylindrical body 20a (a body portion of the inflator 20 continuous with the gas blowing portion 26).

On the other hand, the attachment bracket 40 (see FIG. 2B), which has, as a whole, a substantially inverted L shape consisting of an upper portion and a side portion in side view, is provided with inflator attaching holes 41 and 42, through which the bolts 22 and 24 are inserted, in the upper portion thereof and vehicle attaching holes 43 and 44 in an attachment tab constituting the side portion. The inflator 20 is attached and joined to the roof rail 92 by inserting the bolts etc. through the vehicle attaching holes 43 and 44.

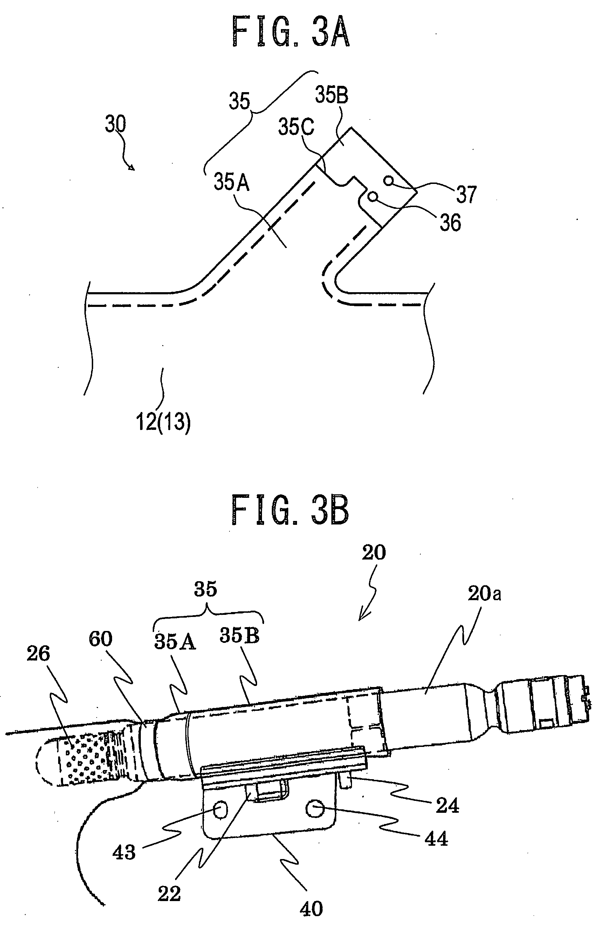

FIG. 3 includes diagrams showing a gas introduction portion 35 formed in the airbag, in which FIG. 3A is an enlarged front view thereof, and FIG. 3B is a front view showing a state in which the inflator 20 is attached thereto.

The gas introduction portion 35 has such a shape that it projects diagonally upward and extends to the right direction in the figure from the upper edge of the airbag 30. The gas introduction portion 35 includes a tubular portion 35A that is continuous with a hollow portion inside the airbag 30 and a substantially rectangular wrapping tab 35B that is continuous with an opening end of the tubular portion 35A and is formed to have a predetermined width (FIG. 3A). Furthermore, the wrapping tab 35B is provided with bolt insertion holes 36 and 37 through which the bolts 22 and 24 of the inflator 20 are inserted.

The gas introduction portion 35 is formed by, for example, sewing an outer edges of portions of a front base fabric piece 12 and a back base fabric piece 13, which constitute the airbag 30, at the portions forming the gas introduction portion 35, leaving the opening 35C unjoined. In this case, the tubular portion 35A is formed of the front base fabric piece 12 and the back base fabric piece 13, and the wrapping tab 35B is formed only of, for example, the back base fabric piece 13 (or the front base fabric piece 12).

Next, the process of attaching the inflator 20 to the airbag 30 will be described.

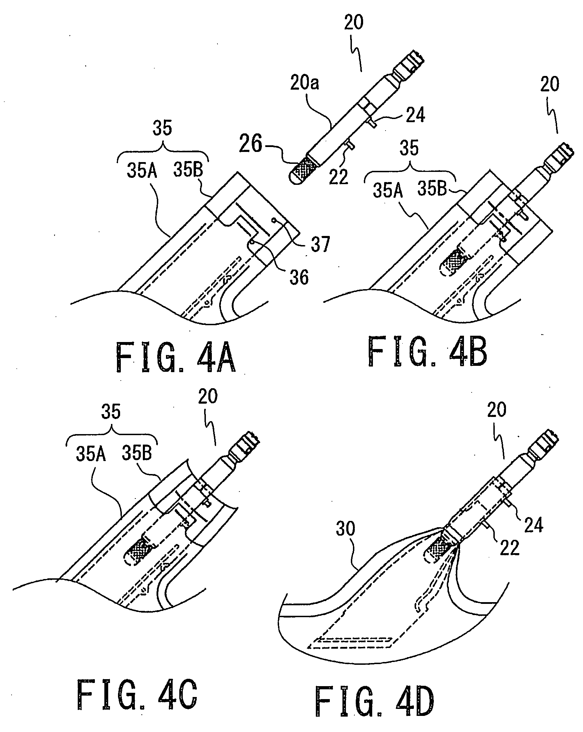

FIGS. 4A to 4D are diagrams for explaining the process of attaching the inflator 20 to the airbag 30.

First, the inflator 20 is disposed at the gas introduction portion 35 of the airbag 30 (FIG. 4A). Subsequently, the gas blowing portion 26 of the inflator 20 is inserted into the tubular portion 35A of the gas introduction portion 35 (FIG. 4B). Thereafter, the wrapping tab 35B is wrapped around the body 20a of the inflator 20 (FIG. 4C), and at this time, the bolts 22 and 24 provided on the inflator 20 are inserted through the bolt insertion holes 36 and 37 in the wrapping tab 35B, thereby completing wrapping (FIG. 4D).

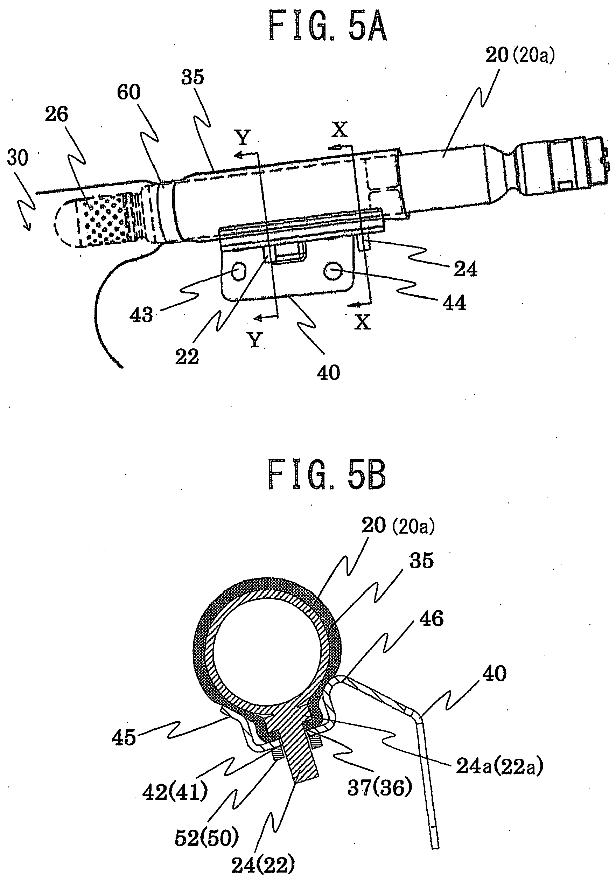

Subsequently, the inflator 20 that is temporarily joined to the airbag 30 via the gas introduction portion 35 in this manner is fitted and joined to the attachment bracket 40. That is, by inserting the bolts 22 and 24 inserted through and projecting from the bolt insertion holes 36 and 37 in the wrapped gas introduction portion 35 through the inflator attaching holes 41 and 42 in the attachment bracket 40 and fitting and screwing nuts 50 (52) (see FIG. 5B), serving as fastening members, from the outside, the inflator 20, the gas introduction portion 35, and the attachment bracket 40 are fastened together.

Next, a joint structure for joining the inflator 20, the gas introduction portion 35, and the attachment bracket 40 will be described in detail.

FIG. 5 includes diagrams showing a state in which the inflator 20 shown in FIG. 2 is joined to the gas introduction portion 35, in which FIG. 5A is a front view of the inflator 20, and FIG. 5B is a cross-sectional view taken along line X-X in FIG. 5A. Note that, because the cross-sectional view of the inflator 20 taken along line Y-Y, shown in FIG. 5A, has the same configuration as that shown in FIG. 5B, reference numerals for the components shown in the cross section taken along line Y-Y are indicated in brackets in FIG. 5B.

As has been described above, the bolt insertion holes 36 and 37 for the two bolts 22 and 24, which are provided on the inflator 20, are provided in the wrapping tab 35B of the gas introduction portion 35 (FIG. 3A). By inserting the bolts 22 and 24 provided on the inflator 20 through the bolt insertion holes 36 and 37, the gas introduction portion 35 is positioned with respect to the inflator 20, and the gas introduction portion 35 is temporarily prevented from slipping off from the inflator 20. As has been described above, the final slip-off prevention is completed by inserting the bolts 22 and 24 through the inflator attaching holes 42 (41) in the attachment bracket 40 and fastening the nuts 52 (50) from outer ends thereof.

Herein, the attachment bracket 40 has, as a whole, a substantially inverted L shape consisting of the upper portion and the side portion in side view. As shown in FIG. 5B, the upper portion thereof is formed of a portion having a substantially U shape in cross section and contact portions 45 and 46, which are a pair of narrow contact members, continuously extending from each of ends of the substantially U-shaped portion and opening outward, i.e., extending in a substantially V shape. One of the contact portions, 46, is bent back and is continuous with the side portion having a substantially inverted L shape.

The pair of contact portions 45 and 46 has contact surfaces that come into contact with the peripheral portion of the body 20a from below, with the gas introduction portion 35 therebetween, when the inflator 20 inserted into the gas introduction portion 35 is attached to the attachment bracket 40.

FIG. 5B shows a state in which the inflator 20 and the gas introduction portion 35 are attached to the bracket 40.

As shown in the figure, the bolt 24 (22) projecting from the outer circumferential surface of the inflator 20 is inserted through the bolt insertion hole 37 (36) in the gas introduction portion 35 and through the inflator attaching hole 42 (41) in the attachment bracket 40 and is fastened with the nut 52 (50) screwed thereon from the outer end. That is, the airbag 30 and the inflator 20 are fastened together with the bolt 24 (22) and the nut 52 (50), and at this time, the gas introduction portion 35 is nipped between the attachment bracket 40 and a large diameter portion 24a (22a) provided at the base end of the bolt 24 (22). Thus, the gas introduction portion 35 (airbag 30) is reliably prevented from slipping off.

Furthermore, by fastening the nut 52 (50), as shown in FIG. 5B, the contact portions 45 and 46 strongly press the outer circumferential surface of the gas introduction portion 35 over a certain length, along the body 20a of the inflator 20. Therefore, the contact portions 45 and 46 and the inflator 20 are securely engaged with each other with the gas introduction portion 35 therebetween. Herein, if the contact portions 45 and 46 are formed of an elastically deformable material, the contact portions 45 and 46 are bent and expand outward so as to follow the radius of curvature of the body 20a of the inflator 20, thereby increasing the area that is in contact with the gas introduction portion 35 covering the body 20a of the inflator 20. Moreover, because a resilient force thereof is added, the inflator 20 and the airbag 30 are more strongly engaged with each other by friction.

Next, as an application example of the above-described attachment bracket 40 for the inflator, a case where an inflator having a different outside diameter is attached will be described.

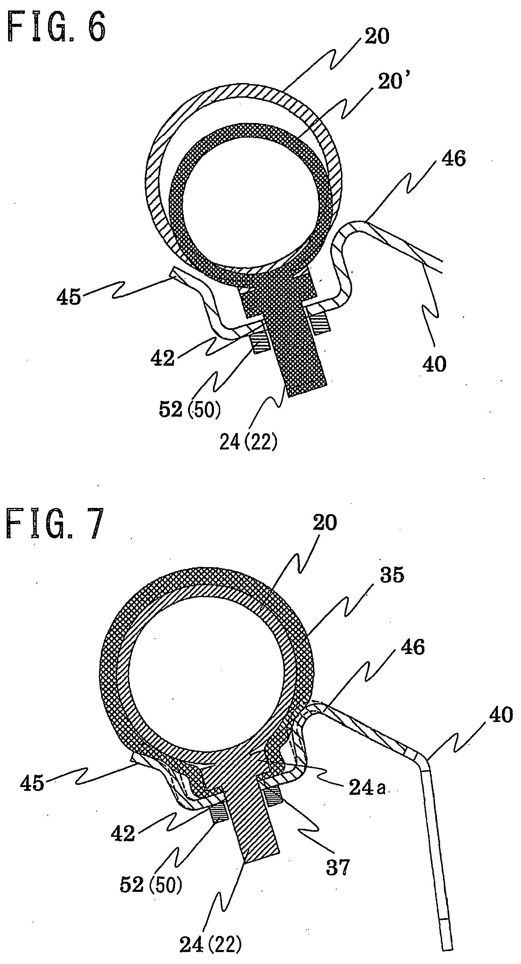

FIG. 6 is a diagram showing the positional relationship between an attachment bracket 40 and inflators 20 and 20', which have different outside diameters, when the two inflators 20 and 20' are attached and joined using the attachment bracket 40 shown in FIG. 5B. Note that FIG. 6 is a diagram in which the gas introduction portion 35 shown in FIG. 7, mentioned below, is omitted.

The contact portions 45 and 46 of the attachment bracket 40 are formed in a substantially V shape in cross section with a groove having a substantially U shape in cross section therebetween. Thus, even in a case where the inflator 20' having a smaller outside diameter than the inflator 20 is used, the gas introduction portion 35 can be nipped between an outer circumferential portion of the inflator 20 and the contact portions 45 and 46 by fastening the attachment bracket 40, the inflator 20, and the gas introduction portion 35 together with the bolt 24 (22) and the nut 52 (50), similarly to the case where the inflator 20 having a larger diameter than the inflator 20 is used.

Furthermore, when the attachment bracket 40 is made of an elastically deformable material, as has been described above, the contact portions 45 and 46 can be easily expanded according to the outside diameter of the inflator 20, regardless of the diameter.

FIG. 7 is a diagram showing the positional relationship between components when the attachment bracket 40, the inflator 20, and the gas introduction portion 35 are fastened together with the bolt 24 (22) and the nut 52 (50). In the figure, the dashed line indicates the position of the contact portions 45 and 46 before being elastically deformed, i.e., the free position. That is, it shows that, when the inflator 20 and the gas introduction portion 35 are fastened together with the bolt 24 (22) and the nut 52 (50), the contact portions 45 and 46 are urged against the gas introduction portion 35, which is externally fitted to the inflator 20, and are elastically deformed and expanded, thereby providing a support surface that conforms to the shape of the outer circumferential surface of the gas introduction portion 35 of an inflator 20 having a larger diameter (see the solid line in the figure).

In this way, the attachment bracket 40 according to this embodiment utilizes its elastic deformation to join the gas introduction portion 35 to the inflator 20 with a predetermined resilient force. Therefore, even when there are changes in the condition of respective components with time (e.g., thermal expansion and deterioration of the gas introduction portion 35), the contact portions 45 and 46 can follow such changes, providing a stable slip-off prevention effect.

Next, a modification of the joint structure using the attachment bracket 40 will be described.

In the configuration in which the gas introduction portion 35 is nipped, a fastening torque between the bolt and the nut may decrease due to changes with time (e.g., thermal expansion and deterioration of the gas introduction portion).

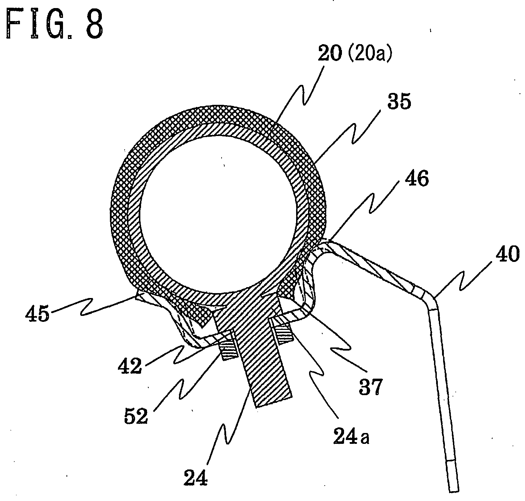

To counter this problem, a locknut may be used as the nut. Another option here is, as shown in FIG. 8, to employ the configuration in which the gas introduction portion 35 is not disposed between the large diameter portion 24a and the attachment bracket 40, so that the distance between the body 20a of the inflator 20 and the attachment bracket 40 can be determined without being influenced by the thickness of the periphery of the bolt insertion hole in the gas introduction portion 35.

FIG. 8 is a diagram showing the positional relationship between components when the hole diameter of the bolt insertion hole 37 in FIG. 5B is made larger than the diameter of the large diameter portion 24a of the bolt 24.

Compared with the configuration shown in FIG. 5B, the hole diameter of the bolt insertion hole 37 in the gas introduction portion 35 is large, and the large diameter portion 24a of the bolt 24 is in contact with the attachment bracket 40. In this case too, the gas introduction portion 35 is nipped between the body 20a of the inflator 20 and the pair of contact portions 45 and 46 extending along the body 20a of the inflator 20 in the longitudinal direction thereof and is prevented from slipping off. Furthermore, even if the gas introduction portion 35 moves around the body 20a of the inflator 20 due to the reaction force of the gas blown from the inflator, because the edge of the bolt insertion hole 37 comes into contact with the large diameter portion 24a, further movement can be prevented.

In this embodiment, it is easy to achieve a desired fastening force by the bolt 24 and the nut 52, and a stable slip-off preventing effect for the gas introduction portion 35 can be obtained.

Next, prevention of gas leakage from the inflator 20 inserted into the gas introduction portion 35 will be described.

In this embodiment, in the vicinity of the gas blowing portion 26 of the inflator 20, a band 60 (FIGS. 3B and 5A) is fastened from an outer circumference side of the gas introduction portion 35 that is externally fitted to the gas blowing portion 26 to seal between the gas introduction portion 35 and the body 20a of the inflator 20.

With this configuration, it is possible to reliably prevent the gas, blowing out of the inflator 20, from flowing back and leaking from the vicinity of the gas introduction portion 35 and the body 20a of the inflator 20. Note that, unlike the slip-off prevention, even if the pressure of the gas blown from the inflator 20 is increased, a satisfactory sealing effect can be obtained merely by fastening the band 60.

Although the joint structure of the airbag device 10 according to this embodiment has been described above, according to this joint structure, by fastening the inflator 20 and the gas introduction portion 35 together with the bolt 24 (22) on the inflator 20 and the nut 52 (50) using the attachment bracket 40 to join to the vehicle 90 (roof rail 92), slip-off prevention and joining of the inflator 20 can be simultaneously achieved.

Therefore, the structure can be simplified and the number of assembling steps can be reduced, compared with the conventional joint structure in which the gas introduction portion is joined using a plurality of attachment brackets and bands.

Furthermore, because the contact portions 45 and 46 of the attachment bracket 40 has an outwardly opening substantially V shape in cross section, the contact portions 45 and 46 can be easily opened by fastening the nut 52 (50) screwed onto the bolt 24 (22), with the inflator 20 being in contact with the contact portions 45 and 46. Accordingly, it is possible to cope with inflators 20 having different outside diameters with one type of attachment bracket 40. Thus, it is possible to enable the use of common joint member to increase the production efficiency of the airbag device 10 and reduce the cost of parts.

Furthermore, compared with joining achieved by fastening a band, as in the case of the conventional configuration, in this embodiment, slip-off prevention of the gas introduction portion 35 from the inflator 20 is achieved not only by using the bolt insertion hole 37 (36) in the gas introduction portion 35, through which the bolt 24 (22) passes, but also by using a friction force generated by nipping the gas introduction portion 35 between the attachment bracket 40 and the inflator 20 and a friction force generated between the gas introduction portion 35 and the contact portions 45 and 46. Thus, a more reliable slip-off prevention effect for an inflator that operates at a higher pressure than the conventional configuration can be obtained.

Although the above description has been given by taking a curtain airbag as an example, the present invention is not limited thereto, and it may be applicable to any other airbag that uses a cylindrical inflator. Furthermore, although it has been described that the fixing member is a bolt and that the fastening member is a nut, for example, the fixing member may be a rod-like member and a fastening member may be means for locking or crimping the attachment bracket that is press-inserted into the inflator. That is, the fixing member and the fastening member may have any configuration as long as the fixing member can be inserted into the bolt insertion hole in the gas introduction portion and the inflator attaching hole in the attachment bracket and the fastening member can fasten the fixing member together.

Furthermore, although the gas introduction portion has been described as a portion formed of a tubular portion and a wrapping tab, it is not limited thereto, and it may be formed solely of a tubular portion that is provided with a bolt insertion hole.

Moreover, although attaching of the inflator to the attachment bracket and attaching of the attachment bracket to the vehicle body are achieved by using separate attachment means, it may be configured such that the attachment bracket is attached to the vehicle body by using, for example, a bolt provided on the inflator. In such a case, not only can the number of bolts required be reduced, but also the configuration of the attachment bracket can be made simpler.

### Reference Signs List

- 10:: airbag device;
- 20:: inflator;
- 20a:: body;
- 22, 24:: bolt;
- 26:: gas blowing portion;
- 30:: airbag;
- 35:: gas introduction portion;
- 35A:: tubular portion;
- 35B:: wrapping tab;
- 36, 37:: bolt insertion hole;
- 40:: attachment bracket;
- 41, 42:: inflator attaching hole;
- 43, 44:: vehicle attaching hole;
- 45, 46:: contact portion;
- 50, 52:: nut; and
- 60:: band.

## Claims

1. An airbag device comprising:
an airbag (30);
a gas introduction portion (35) provided in the airbag (30); and
an inflator (20) inserted into the gas introduction portion (35), wherein
the inflator (20) has a fixing member projecting outward from an outer circumferential surface of a body thereof,
the fixing member is inserted through a fixing-member insertion hole provided in the gas introduction portion (35) and an inflator attaching hole (41, 42) provided in an attachment bracket (40) for attaching the airbag (30) to a vehicle body, and a fastening member is fitted to the fixing member, thereby fastening and connecting the gas introduction portion (35) and the inflator (20) together to the attachment bracket (40),
**characterized in that**
the attachment bracket (40) includes a pair of contact portions (45, 46) with which the outer circumferential surface of the gas introduction portion (35), which covers the body of the inflator (20), is brought into contact, over a predetermined length in the longitudinal direction thereof,
the inflator attaching hole (41, 42) is provided between the pair of contact portions (45, 46), and
the pair of contact portions (45, 46) is elastically deformable so as to open outward by the fastening force of the fixing member and the fastening member.

2. The airbag device according to Claim 1, wherein the contact portions (45, 46) are provided at ends of a groove having a substantially U shape in cross section and are formed in a substantially V shape opening outward.

3. The airbag device according to Claims 1 or 2, wherein the fixing members are provided at a distance from each other on the body of the inflator.

4. The airbag device according to any one of Claims 1 to 3, wherein
the fixing members have a large diameter portion, and
the gas introduction portion (35) is nipped between the large diameter portion and the attachment bracket due to a fastening force of the fixing members and the fastening members.

5. The airbag device according to any one of Claims 1 to 3, wherein
the fixing members have a large diameter portion,
the diameter of the fixing-member insertion holes in the gas introduction portion (35) is larger than the diameter of the large diameter portion, and
the gas introduction portion (35) is nipped between the inflator and the attachment bracket due to a fastening force of the fixing members and the fastening members.

6. The airbag device according to any one of Claims 1 to 5, wherein a sealing band (60) is fastened around an outer circumference of the gas introduction portion (35), in the vicinity of a gas blowing portion (26) of the inflator inserted into the gas introduction portion (35).

7. The airbag device according to any one of Claims 1 to 6, wherein
the gas introduction portion includes a tubular portion formed by joining a front base fabric piece (12) and a back base fabric piece (13), which constitute the airbag, leaving a gas introduction port unjoined, and a wrapping tab (35B) that is formed by extending one of the front base fabric piece (12) and the back base fabric piece (13) outward from the tubular portion and that has the fixing-member insertion holes through which the fixing members are inserted, and
a gas blowing portion (26) of the inflator is inserted into the tubular portion, and the wrapping tab (35B) is wound around the body of the inflator so as to cover the body.

8. The airbag device according to any one of Claims 1 to 7, wherein the fixing members are bolts (22, 24), and the fastening members are nuts (50, 52).

## Patentansprüche

1. Airbagvorrichtung, umfassend:
einen Airbag (30);
einen Gaseinleitungsabschnitt (35), der in dem Airbag (30) bereitgestellt ist; und
einen Inflator (20), der in den Gaseinleitungsabschnitt (35) eingeführt ist, wobei
der Inflator (20) ein Fixierelement aufweist, das von einer äußeren Umfangsoberfläche eines Körpers davon nach außen hervorsteht,
das Fixierelement durch eine Fixierelement-Einführöffnung eingeführt wird, die in dem Gaseinleitungsabschnitt (35) bereitgestellt ist, und eine Inflatorbefestigungsöffnung (41, 42) in einem Befestigungswinkel (40) zur Anbringung des Airbags (30) an einer Fahrzeugkarosserie bereitgestellt ist und ein Befestigungselement an dem Fixierelement montiert ist, sodass der Gaseinleitungsabschnitt (35) und der Inflator (20) zusammen an dem Befestigungswinkel (40) befestigt und damit verbunden sind,
**dadurch gekennzeichnet, dass**
der Befestigungswinkel (40) ein Paar Kontaktabschnitte (45, 46) aufweist, mit denen die äußere Umfangsoberfläche des Gaseinleitungsabschnitts (35), der den Körper des Inflators (20) abdeckt, über eine vorbestimmte Länge in der Längsrichtung davon in Kontakt gebracht ist,
die Inflatorbefestigungsöffnung (41, 42) zwischen dem Paar Kontaktabschnitten (45, 46) bereitgestellt ist, und
das Paar Kontaktabschnitte (45, 46) derart elastisch verformbar ist, dass es sich durch die Befestigungskraft des Fixierelements und des Befestigungselements nach außen öffnet.

2. Airbagvorrichtung nach Anspruch 1, wobei die Kontaktabschnitte (45, 46) an Enden einer Nut bereitgestellt sind, die einen im Wesentlichen U-förmigen Querschnitt aufweist, und in einer im Wesentlichen V-Form ausgebildet sind, die sich nach außen öffnet.

3. Airbagvorrichtung nach Anspruch 1 oder 2, wobei die Fixierelemente in einem Abstand voneinander an dem Körper des Inflators bereitgestellt sind.

4. Airbagvorrichtung nach einem der Ansprüche 1 bis 3, wobei
die Fixierelemente einen Abschnitt von großem Durchmesser aufweisen, und
der Gaseinleitungsabschnitt (35) aufgrund einer Befestigungskraft der Fixierelemente und der Befestigungselemente zwischen dem Abschnitt von großem Durchmesser und dem Befestigungswinkel eingeklemmt ist.

5. Airbagvorrichtung nach einem der Ansprüche 1 bis 3, wobei
die Fixierelemente einen Abschnitt von großem Durchmesser aufweisen, und
der Durchmesser der Fixierelement-Einführöffnungen in dem Gaseinleitungsabschnitt (35) größer als der Durchmesser des Abschnitts von großem Durchmesser ist, und
der Gaseinleitungsabschnitt (35) aufgrund einer Befestigungskraft der Fixierelemente und der Befestigungselemente zwischen dem Abschnitt von großem Durchmesser und dem Befestigungswinkel eingeklemmt ist.

6. Airbagvorrichtung nach einem der Ansprüche 1 bis 5, wobei ein Abdichtband (60) um einen äußeren Umfang des Gaseinleitungsabschnitts (35) in der Nähe eines Gasblasabschnitts (26) des Inflators befestigt ist, der in den Gaseinleitungsabschnitt (35) eingeführt ist.

7. Airbagvorrichtung nach einem der Ansprüche 1 bis 6, wobei
der Gaseinleitungsabschnitt einen röhrenförmigen Abschnitt aufweist, der durch Verbinden eines vorderen Grundstoffstücks (12) und eines hinteren Grundstoffstücks (13) gebildet ist, die den Airbag bilden, wobei ein Gaseinleitungsanschluss unverbunden bleibt, und eine Umhüllungslasche (35B), die durch Ausbreiten eines des vorderen Grundstoffstücks (12) und des hinteren Grundstoffstücks (13) außerhalb des röhrenförmigen Abschnitts gebildet ist und die die Fixierelement-Einführöffnungen aufweist, durch die die Fixierelemente eingeführt sind, und
ein Gasblasabschnitt (26) des Inflators in den röhrenförmigen Abschnitt eingeführt ist und die Umhüllungslasche (35B) um den Körper des Inflators gewickelt ist, um den Körper abzudecken.

8. Airbagvorrichtung nach einem der Ansprüche 1 bis 7, wobei die Fixierelemente Schrauben (22, 24) sind und die Befestigungselemente Muttern (50, 52) sind.

## Revendications

1. Dispositif de coussin de sécurité qui comprend :
un coussin de sécurité (30) ;
une partie d'introduction de gaz (35) prévue dans le coussin de sécurité (30) ; et
un gonfleur (20) inséré dans la partie d'introduction de gaz (35), dans lequel
le gonfleur (20) possède un élément de fixation qui se projette vers l'extérieur depuis une surface circonférentielle extérieure d'un corps de celui-ci,
l'élément de fixation est inséré dans un trou d'insertion d'élément de fixation prévu dans la partie d'introduction de gaz (35) et un trou de fixation de gonfleur (41, 42) prévu dans une patte de fixation (40) afin de fixer le coussin de sécurité (30) sur le châssis d'un véhicule, et un élément d'attache est installé sur l'élément de fixation, afin d'attacher et de relier la partie d'introduction de gaz (35) et le gonfleur (20) à la patte de fixation (40),
**caractérisé en ce que**
la patte de fixation (40) comprend une paire de parties de contact (45, 46) avec lesquelles la surface circonférentielle extérieure de la partie d'introduction de gaz (35), qui recouvre le corps du gonfleur (20), est amenée en contact, sur une longueur prédéterminée dans la direction longitudinale de celle-ci,
le trou de fixation de gonfleur (41, 42) est prévu entre la paire de parties de contact (44, 46), et
la paire de parties de contact (45, 46) est élastiquement déformable de façon à s'ouvrir vers l'extérieur à l'aide de la force de fixation de l'élément de fixation et de l'élément d'attache.

2. Dispositif de coussin de sécurité selon la revendication 1, dans lequel les parties de contact (45, 46) sont prévues aux extrémités d'une rainure qui possède une section transversale sensiblement en forme de U, et possèdent une forme d'ouverture vers l'extérieur sensiblement en V.

3. Dispositif de coussin de sécurité selon la revendication 1 ou 2, dans lequel les éléments de fixation sont prévus à une certaine distance les uns des autres sur le corps du gonfleur.

4. Dispositif de coussin de sécurité selon l'une quelconque des revendications 1 à 3, dans lequel
les éléments de fixation possèdent une partie à grand diamètre, et
la partie d'introduction de gaz (35) est prise entre la partie à grand diamètre et la patte de fixation, en raison d'une force de fixation des éléments de fixation et des éléments d'attache.

5. Dispositif de coussin de sécurité selon l'une quelconque des revendications 1 à 3, dans lequel
les éléments de fixation possèdent une partie à grand diamètre,
le diamètre des trous d'insertion des éléments de fixation dans la partie d'introduction de gaz (35) est supérieur à celui de la partie à grand diamètre, et
la partie d'introduction de gaz (35) est prise entre le gonfleur et la patte de fixation, en raison d'une force de fixation des éléments de fixation et des éléments d'attache.

6. Dispositif de coussin de sécurité selon l'une quelconque des revendications 1 à 5, dans lequel une bande d'étanchéité (60) est fixée autour d'une circonférence extérieure de la partie d'introduction de gaz (35), à proximité d'une partie de soufflage du gaz (26) du gonfleur inséré dans la partie d'introduction de gaz (35).

7. Dispositif de coussin de sécurité selon l'une quelconque des revendications 1 à 6, dans lequel
la partie d'introduction de gaz comprend une partie tubulaire formée en joignant un morceau de tissu avant (12) et un morceau de tissu arrière (13), qui constituent le coussin de sécurité, en laissant un orifice d'introduction de gaz non-joint, et une enveloppe (35B) qui est formée en étendant l'un du morceau de tissu avant (12) et du morceau de tissu arrière (13) vers l'extérieur depuis la partie tubulaire, et qui possède des trous d'insertion d'éléments de fixation dans lesquels sont insérés les éléments de fixation, et
une partie de soufflage du gaz (26) du gonfleur est insérée dans la partie tubulaire, et l'enveloppe (35B) est enroulée autour du corps du gonfleur de façon à recouvrir le corps.

8. Dispositif de coussin de sécurité selon l'une quelconque des revendications 1 à 7, dans lequel les éléments de fixation sont des boulons (22, 24), et les éléments d'attache sont des écrous (50, 52).
